# EUROPÄISCHE PATENTSCHRIFT

(11) **EP 1 273 084 B1**
(45) Veröffentlichungstag und Bekanntmachung des Hinweises auf die Patenterteilung: **08.10.2008**
(21) Anmeldenummer: 01931500.1
(22) Anmeldetag: 08.03.2001
(51) Int. Cl.: H02J 7/14

(54) **SCHALTUNGSANORDNUNG ZUM BETREIBEN VON ELEKTRISCHEN ODER ELEKTRONISCHEN KOMPONENTEN IN EINEM KRAFTFAHRZEUG MIT EINEM ZWEI-SPANNUNGS-BORDNETZ**
CIRCUIT ARRANGEMENT FOR OPERATING ELECTRIC OR ELECTRONIC COMPONENTS IN A MOTOR VEHICLE HAVING AN ELECTRIC SYSTEM COMPRISING TWO VOLTAGES
DISPOSITIF DE COMMUTATION PERMETTANT L'EXPLOITATION DE COMPOSANTS ELECTRIQUES OU ELECTRONIQUES DANS UNE AUTOMOBILE AVEC UN RESEAU DE BORD A DEUX TENSIONS

(30) Priorität: 17.03.2000 DE 10013459
(43) Veröffentlichungstag der Anmeldung: 08.01.2003
(73) Patentinhaber: Compact Dynamics GmbH, 82319 Starnberg (DE)
(72) Erfinder: GRÜNDL, Andreas, 81377 München (DE); HOFFMANN, Bernhard, 82319 Starnberg (DE)
(74) Vertreter: Schmidt, Steffen J.
(86) Internationale Anmeldenummer: PCT/EP2001/002623
(87) Internationale Veröffentlichungsnummer: WO 2001/069757

(56) Entgegenhaltungen:
- DE-A- 4 005 809
- DE-A- 4 041 220
- DE-A- 4 419 005
- DE-A- 19 522 126
- DE-A- 19 600 074
- DE-A- 19 700 521

## Beschreibung

### Hintergrund der Erfindung

Die Erfindung betrifft eine Schaltungsanordnung zum Betreiben von elektrischen oder elektronischen Komponenten in einem Kraftfahrzeug mit einem Zwei-Spannungs-Bordnetz.

Im Kraftfahrzeug-Bereich sind Relais eingesetzt, die kompakt bauen, zuverlässig funktionieren und robust sind. Insbesondere sind in Kraftfahrzeugen Relais mit übereinstimmenden Gehäuse-Abmessungen und Anschlußbelegungen eingesetzt, wobei üblicherweise die Relais in Steckfassungen eingesetzt sind, damit sie zur Fehlerbehebung leicht ausgetauscht werden können.

Nachfolgend werden die Begriffe "Gleichstrom/Gleichstrom-Wandler" und "Gleichspannungs/Gleichspannungswandler" synonym im Sinne von DC/DC-Wandler verwendet, bei dem eine Eingangsspannung eines ersten Pegels in eine Ausgangsspannung eines zweiten Pegels umgesetzt wird.

### Stand der Technik

Wegen der zunehmenden Elektrifizierung von Kraftfahrzeugen, insbesondere auch Personen-Kraftfahrzeugen, bei denen immer höhere Leistungen für elektrische Verbraucher zur Verfügung zu stellen sind, geht die Entwicklung dahin, neben dem heute weitestgehend verbreiteten 12 Volt Bordnetz ein zweites Bordnetz mit höherer Spannung (zum Beispiel 42 Volt) einzuführen. Allerdings hat dies zur Folge, daß der Verkabelungsaufwand erheblich steigt, da praktisch an allen Orten im Kraftfahrzeug beide Spannungen zur Verfügung stehen müssen.

Außerdem ist die zu produzierende Stückzahl von Verbrauchern mit höherer Betriebsspannung voraussichtlich nicht so hoch wie die zu produzierende Stückzahl von Verbrauchern mit herkömmlicher Betriebsspannung (12 Volt), wodurch die Herstellungskosten von Verbrauchern mit höherer Betriebsspannung relativ hoch sind. Somit besteht durchaus der Bedarf, Verbraucher mit der einen Betriebsspannung durch-Ansteuersignale mit der anderen Betriebsspannung zu betätigen. Andererseits ist auch der Leitungsquerschnitt für Zuleitungen zu Verbrauchern mit niedriger Spannung und hoher Stromaufnahme relativ groß zu dimensionieren, so daß der Raumbedarf der Kabelbäume im Kraftfahrzeug bei niedriger Betriebsspannung (12 - 14 Volt) höher ist als bei einer höheren Betriebsspannung (42 Volt). Aus diesem Umstand resultiert der Wunsch nach einer höheren Betriebsspannung (42 Volt).

DE 40 41 220 A1 beschreibt eine Stromversorgung für Kraftfahrzeuge, bei der eine eingangsseitig mit der Niedervolt-Batteriespannung gespeiste, spannungsgeregelte DC/DC-Wandleranordnung eine Mittelvolt-Spannungsschiene auf einer stabilisierten Mittelvolt-Spannung hält. Die Mittelvolt-Spannungsschiene dient zur Energieversorgung von Verbrauchern, die mit der Mittelvolt-Spannung oder mit einer Hochvolt-Spannung zu betreiben sind. Mittelvolt-Spannungsverbraucher werden unmittelbar von der Mittelvolt-Spannungsschiene mit Energie versorgt, wohingegen Hochvolt-Spannungsverbraucher jeweils mittels eines zwischen der DC/DC-Wandleranordnung und dem jeweiligen Verbraucher angeordneten Hochvolt-Spannungswandlers versorgt werden. Insbesondere dient die DC/DC-Wandleranordnung, um Niedervolt-Bordspannungen für Kraftfahrzeuge von etwa 12 Volt auf eine höhere, stabilisierte mittlere Spannung von 150 Volt hinaufzutransformieren. Die an der Mittelvolt-Spannungsschiene anliegende mittlere Spannung wird von den Hochvolt-Spannungswandlern herkömmlicher Bauart auf die jeweilige erforderliche Hochvolt-Spannung zwischen etwa 5 und 30 kV gebracht.

DE 40 05 809 A1 offenbart einen Reglerbaustein mit einem serienmäßigen Relais- oder Steckergehäuse und einer darin angeordneten Schaltungsanordnung, deren Anschlußelemente aus dem Gehäuse herausgeführt sind. Insbesondere sind die Anschlußelemente in einem für das serienmäßige Gehäuse vorgegebenen Rastermaß, im Speziellen nach einer Norm für Kraftfahrzeugrelais, angeordnet. Auf diese Weise ist es möglich, den Reglerbaustein in eine genormte Steckfassung für Relais einzustekken. Durch eine entsprechende geringfügige Anpassung der Verdrahtung eines Relais, das in der Regel neben dem Reglerbaustein angeordnet ist, kann dieser mit einer geregelten Spannung angesteuert werden. Somit wird der Reglerbaustein nicht verwendet, um ein Relais zu ersetzen. Vielmehr wird die genormte Steckfassung genutzt, um den Reglerbaustein anzuordnen, der zur Steuerung eines oder mehrerer Relais dient. Dementsprechend ist es erforderlich, neben den für die vorhandenen Relais erforderlichen Steckfassungen für jeden Reglerbaustein eine weitere Steckfassung vorzusehen, oder ein Relais zu entfernen, um eine freie Steckfassung bereitzustellen.

In der DE 44 19 005 A1 ist ein elektronischer Lastschalter für Kraftfahrzeuge beschrieben, bei dem ein elektronischer Leistungsschalter und eine integrierte Ansteuerelektronik auf einem Verdrahtungsträger angeordnet sind. Außenanschlüsse des Verdrahtungsträgers sind als kraftfahrzeugtypisches Steckkontaktteil ausgeformt. Auf diese Weise ist es möglich, herkömmliche elektromechanische Lastschalter unmittelbar durch diesen Lastschalter zu ersetzen, ohne daßdabei eine Änderung der äußeren Verschaltung des Lastschal-ters erforderlich ist. Umfaßt die Ansteuerelektronik einen integrierten Taktgeber, kann der Lastschalter als elektronischer Blinkgeber verwendet werden. Teile des Verdrahtungsträgers können als-niederohmige Widerstände ausgebildet sein, die zur Stromüberwachung dienen und eine strombegrenzende Funktion haben können. Der dort beschriebene Lastschalter dient lediglich zum Ersatz herkömmlicher elektromechanischer Lastschalter (Relais), wobei die von dem Lastschalter erhaltenen und abgegebenen Signale, Ströme und Spannungen im wesentlichen denen eines zu ersetzenden Relais entsprechen.

Aus der DE 196 00 074 A1 ist ein Fahrzeugbordnetz bekannt, das neben der konventionellen Bordnetzspannung von etwa 12 Volt eine weitere Spannung für leistungsstarke elektrische Verbraucher bereitstellt. Die höhere Spannung, die bis zu 4 mal höher als die konventionelle Bordnetzspannung sein kann, wird mittels einer Parallelschaltung mehrerer Chopperstufen erzeugt. Die Versorgung leistungsstarker elektrischer Verbraucher erfolgt auf herkömmliche Weise, indem eine die Chopperstufen umfassende leistungselektronische Schaltung zwischen einer Fahrzeugbatterie und einem Generator konventioneller Bauart eingefügt und dieser auf herkömmliche Weise mittels Kabelbäumen mit den Verbrauchern verbunden wird. Auf diese Weise wird der Maximalstrom in den Leitungen der Kabelbäume und bei gleicher Verbraucherleistung deren ohm'schen Verluste reduziert, weshalb Leitungen geringeren Querschnittes verwendet werden können.

### Der Erfindung zugrundeliegendes Problem

Ausgehend von der dieser Situation liegt der Erfindung das Problem zugrunde, eine Möglichkeit bereitzustellen, den Verdrahtungs- und Verschaltungsaufwand in Kraftfahrzeugen mit Zwei-Spannungs-Bordnetzen zu verringern und mit kostengünstigen Mitteln zu realisieren.

### Erfindungsgemäße Lösung

Die erfindungsgemäße Lösung dieser Aufgabe besteht in einer Schaltungsanordnung zum Betreiben von elektrischen oder elektronischen Komponenten in einem Kraftfahrzeug mit einem Zwei-Spannungs-Bordnetz, mit einem Gleichstrom/Gleichstrom-Wandler, welcher die im Anspruch 1 angegebenen Merkmalen enthält.

### Vorteil der Erfindung

Diese Ausgestaltung erlaubt im wesentlichen eine Beibehaltung der bisher üblichen Verdrahtung bzw. Verkabelung der Kraftfahrzeug-Elektrik/Elektronik auch bei Fahrzeugen mit einem Zwei-Spannungs-Bordnetz. Dabei ist der Raumbedarf praktisch identisch, da auch in der bisher üblichen Verdrahtung bzw. Verkabelung der Kraftfahrzeug-Elektrik/Elektronik Relais zwischen dem jeweiligen Schaltorgan (zum Beispiel dem Ein/Aus-Schalter für die Heckscheibenheizung) und-und dem Verbraucher (Widerstandselement der Heckscheibenheizung) vorgesehen sind. Üblicherweise sind die Relais der Kraftfahrzeug-Elektrik/Elektronik einer Funktionsgruppe (Starter; Beleuchtung, Signalanlage; Gebläse, Lüftung, Heizung; Verteilereinspritzpumpe etc.) zusammengefaßt und in räumlicher Nähe zueinander angeordnet. Durch die Erfindung ist es möglich, anstelle der bisherigen Relais äußerlich (Abmessungen, Anschlußbelegung etc.) übereinstimmende Bausteine einzusetzen, die eine Spannungswandlung auf das entsprechende Spannungsniveau bewirken. Ein weiterer Vorteil besteht darin, daß die Fehlersuche und die Wartung einer mit derartigen Schaltungsanordungen ausgestalteten Kraftfahrzeug-Elektrik/Elektronik besonders einfach ist, da es in gleicher Weise wie das Auswechseln von in Sockeln eingesteckten Relais geschieht.

### Vorteilhafte Weiterbildungen der Erfindung

In einer ersten Ausführungsform der Erfindung ist der Gleichstrom/Gleichstrom-Wandler dazu eingerichtet, eine an dem Eingangs-Anschluß anliegende Spannung von etwa 12 - 14 Volt in eine an dem Ausgangs-Anschluß bereitgestellte Spannung von etwa 42 Volt umzusetzen.

In einer zweiten Ausführungsform der Erfindung ist der Gleichstrom/Gleichstrom-Wandler dazu eingerichtet, eine an dem Eingangs-Anschluß anliegende Spannung von etwa 42 Volt in eine an dem Ausgangs-Anschluß bereitgestellte Spannung von etwa 12 - 14 Volt umzusetzen.

Die dafür erforderliche Wandler-Schaltung weist in einer Ausführungsform der Erfindung einen ein/ausschaltbaren Oszillator mit einer Schwingfrequenz von etwa 20-kHz bis wenigstens etwa 2 MHz und eine mit dem Ausgang des Oszillators gekoppelte Leistungsendstufe auf, der ein Gleichrichter nachgeschaltet ist. Der Leistungsendstufe kann dabei ein Transformator vor- oder nachgeschaltet sein, falls eine Potentialtrennung für erforderlich erachtet wird. Bevorzugt ist jedoch in diesem Fall, wenn die Eingangsseite der Leistungsendstufe mit der Sekundärseite des Transformators verbunden ist, da dann die Leistung nicht über den Transformator übertragen werden muß, so daß dieser klein bauend ausgeführt sein kann. Bei Ausführungsformen mit gemeinsamem Masse-Potential findet jedoch keine Potentialtrennung statt, so daß der Transformator entfällt.

Sofern die am Eingangs-Anschluß der Schaltungsanordnung eingespeiste elektrische Leistung nicht ausreicht, um die für den jeweiligen Verbraucher erforderliche Leistung am Ausgangs-Anschluß bereitzustellen, ist bei einer Ausführungsform der erfindungsgemäß Schaltungsanordnung ein Versorgungsspannungs-Anschluß für eine dem Pegel des Eingangs-Schaltsignals entsprechende Versorgungsspannung (etwa 12 -14 Volt bzw. etwa 42 Volt) vorhanden. Diese Spannung wird dann durch die Wandler-Schaltung auf den jeweils anderen Spannungspegel umgesetzt und entsprechend dem Verlauf der Spannung am Eingangs-Anschluß am dem Ausgangsanschluß bereitgestellt.

Bei einer Ausführungsform der Erfindung sind zur Vermeidung separater Kühlkörper für die Leistungshalbleiter des Gleichstrom/Gleichstrom-Wandlers die Leistungshalbleiter in wärmeleitendem Kontakt mit Eisen enthaltenden induktiven Bauteilen des Gleichstrom/Gleichstrom-Wandlers stehend angeordnet. Als Eisen enthaltende induktive Bauteile kommen Transformatoren, Drosseln oder andere mit einer oder mehreren Wicklungen-versehene induktive Koppelelemente aus Eisenblech oder aus Ferrit oder dergl. in Betracht. Auf diese Weise hat der relativ voluminöse Eisenkörper zum Beispiel einer Drossel oder eines Transformators gleichzeitig als zweite Funktion die eines Wärme ableitenden Elementes. Insbesondere für Einsatzgebiete mit kurzzeitiger Belastung (zum Beispiel Blink-Leuchte, Brems-Leuchte, Signal-Hupe oder dergl.) ist dies eine Möglichkeit für sehr kompakt bauende Schaltungsanordnungen mit relativ großer Leistung .

Bei einer bevorzugten Ausführungsform der Erfindung wird auf die Verwendung einer Leiterplatte oder Platine (gedruckte Schaltung) ebenfalls zur Volumeneinsparung verzichtet. Statt dessen werden elektrische Bauteile des Gleichstrom/Gleichstrom-Wandlers über tragende Leitungen miteinander elektrisch und mechanisch verbunden. Um dennoch eine genügende mechanische Festigkeit und Unanfälligkeit gegen äußere Einflüsse (Feuchtigkeit, Kondenswasser, Staub etc.) zu realisieren wird zusätzlich die gesamte Schaltung mit einem Kunstharz vergossen.

Gemäß einer bevorzugten Ausführungsform der Erfindung weist ein Gleichstrom/Gleichstrom-Wandler zur Verwendung in der vorstehend beschriebenen Schaltungsanordung wenigstens zwei aus zwei in Serie geschalteten Leistungshalbleitern gebildete Halbbrückenschaltungen auf, bei denen die jeweiligen beiden Leistungshalbleiter mit einer Ansteuerschaltung verbunden sind, die dazu eingerichtet ist, die beiden Leistungshalbleiter gegenphasig leitend und sperrend zu schalten, wobei mit dem Mittelpunkt jeder Halbbrückenschaltung ein erster Anschluß einer Induktivität elektrisch leitend verbunden ist, jeweils zweite Anschlüsse der Induktivitäten elektrisch leitend miteinander verbunden sind, und die Induktivitäten miteinander magnetisch leitend durch ein magnetisches Koppelelement verbunden sind, und wobei die Ansteuerschaltung dazu eingerichtet ist, die Halbbrückenschaltungen so anzusteuern, daß jeweils nur an einer der Induktivitäten Spannung anliegt.

Bei dieser Schaltung ist eine vorbestimmte Anzahl n Halbbrükkenschaltungen mit der Ansteuerschaltung verbunden sind und mit dem Mittelpunkt jeder Halbbrückenschaltung ein erster Anschluß einer von einer vorbestimmte Anzahl n Induktivitäten elektrisch leitend verbunden ist und die jeweils zweiten Anschlüsse der Induktivitäten elektrisch leitend miteinander verbunden sind, und wobei vorzugsweise das magnetische Koppelelement ein Ferrit-haltiges Bauteil ist, das die n Induktivitäten miteinander koppelt.

Sofern die Anzahl der Halbbrückenanordnungen bzw. der Induktivitäten in dem magnetischen Koppelelement gleich dem Übersetzungsverhältnis der Eingangs- zur Ausgangsspannung ist, sind praktisch keine Siebglieder oder dergl. zur Spannungsglättung erforderlich. Allerdings kann zur Verringerung von evtl. auftretenden Spannungsspitzen an dem elektrischen Verbindungspunkt der zweiten Anschlüsse der Induktivitäten eine weitere Induktivität in Reihe geschaltet sein.

Außerdem können zur weiteren Glättung und zum Ausgleich von Lastschwankungen am parallel zu den Halbbrückenanordnungen und am von den Halbbrückenanordnungen abliegenden Anschluß der Induktivitäten bzw. der weiteren Induktivität jeweils ein Glättungskondensator angeordnet sein.

Weitere Eigenschaften, Merkmale, Vorteile und mögliche Abwandlungen der Erfindung werden anhand der nachstehenden Beschreibung der Zeichnung deutlich, in denen Ausführungsbeispiele der Erfindung dargestellt sind.

### Kurzbeschreibung der Zeichnung

Fig. 1 zeigt eine schematische Darstellung einer Schaltungsanordnung eines Relais in einem Zwei-Spannungs-Bordnetz in einer herkömmlichen Verschaltung.

Fig. 2 zeigt eine schematische Darstellung einer Schaltungsanordnung eines Zwei-Spannungs-Bordnetzes gemäß der Erfindung.

Fig. 3 zeigt eine schematische Darstellung einer Schaltungsanordnung eines Spannungwandlers für eine erfindungsgemäße Schaltungsanordnung gemäß Fig. 2.

Fig. 4a zeigt eine schematische Seitenansicht eines magnetischen Koppelelementes mit drei Induktivitäten für die Schaltungsanordnung des Spannungwandlers nach Fig. 3.

Fig. 4b zeigt eine schematische Draufansicht des magnetischen Koppelelementes nach Fig. 4a.

Fig. 5 zeigt einen schematischen Verlauf von Ansteuerungssignalen für die Schaltungsanordnung des Spannungswandlers nach Fig. 3.

### Ausführliche Beschreibung der Zeichnung

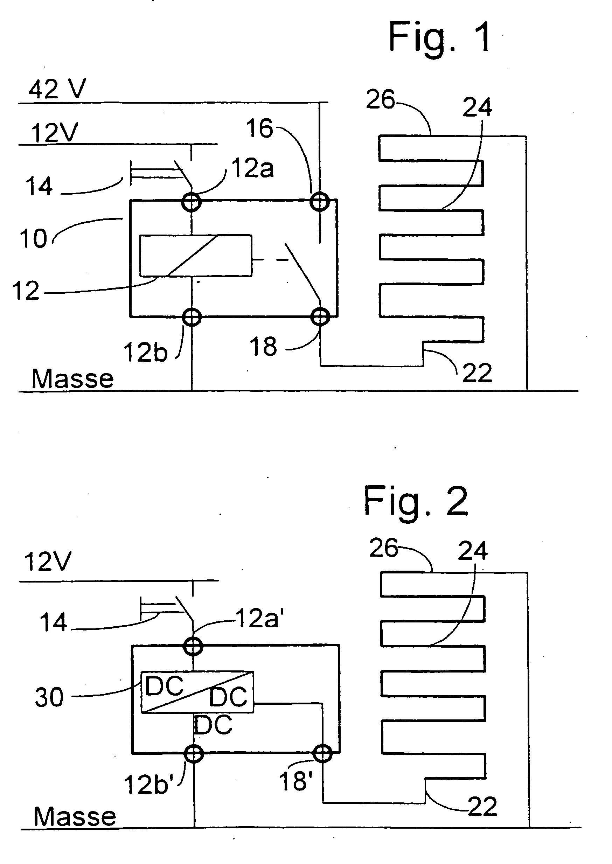

Fig. 1 zeigt eine schematische Darstellung einer anordnung eines Relais 10 eines Zwei-Spamrungs-Bordnetzes. Bei dem Relais 10 ist dessen erster Anschluß 12a einer Spule 12 über einen Ein-/Aus-Schalter 14 an eine erste Spannung mit einem niedrigeren Pegel (ca. 12 - 14 Volt), und dessen zweiter Anschluß 12b der Spule 12 mit Masse verbunden. Ein dritter Anschluß 16 und ein vierter Anschluß 18 des Relais 10 sind jeweils mit einem Schließer-Schaltelement 20 verbunden, dessen Kontakt im Arbeitszustand des Relais 10 geschlossen und im Ruhezustand des Relais 10 geöffnet ist.

Es versteht sich, daß anstelle des gezeigten Schließer-Schaltelementes 20 auch Öffner-, Wechsler-, oder Mehrfach-Kontaktelemente in dem Relais 10 enthalten sein können.

Der dritte Anschluß 16 des Relais 10 ist mit einer zweiten Spannung verbunden, die einen höheren Pegel (ca. 42 Volt) hat, während dessen vierter Anschluß 18 mit einem ersten Anschluß 22 eines Verbrauchers 24 verbunden ist. Ein zweiter Anschluß 26 des Verbrauchers 24 ist mit Masse verbunden.

Bei einer Betätigung des Ein-/Aus-Schalters 14 fließt durch die Spule 12 des Relais 10 Strom, so daß das Schließer-Schaltelement 20 aus seiner offenen in seine geschlossene Stellung wechselt und der Verbraucher 24 mit der zweiten Spannung verbunden ist, die einen höheren Pegel (ca. 42 Volt) hat.

In Fig. 2 ist eine Ausführungsform der Erfindung schematisch gezeigt, wobei in einem Gehäuse mit gleichen Abmessungen, Eigenschaften und Anschlußbelegungen bzw. Anschluß-Layout etc. wie in Fig. 1 das Relais 10 ein Gleichstrom/ Gleichstrom-Wandler 30 angeordnet ist, der einen Eingangs-Anschluß 12a', einen Ausgangs-Anschluß 18' und einen Masse-Anschluß 12b' aufweiset. Der erste Anschluß 12a' führt zu einem Eingang des Gleichstrom/Gleichstrom-Wandlers 30 und ist über einen Ein-/Aus-Schalter 14' an eine erste Spannung mit einem niedrigeren Pegel (ca. 12 - 14 Volt) angeschlossen.

Der zweite Anschluß 12b' ist der Masse-Anschluß des Gleichstrom/Gleichstrom-Wandlers 30 und ist in gleicher Weise wie der Anschluß 12b in Fig. 1 mit Masse verbunden.

An dem Ausgangs-Anschluß 18' des Gleichstrom/Gleichstrom-Wandlers 30 liefert dieser bei betätigtem Ein-/Aus-Schalter 14' eine Ausgangs-Spannung, die - gegen Masse - auf einem höheren Pegel (zum Beispiel 42 Volt) liegt als die erste Spannung mit einem niedrigeren Pegel (ca. 12 - 14 Volt).

Insbesondere für Gleichstrom/Gleichstrom-Wandler 30 bei denen die Ausgangsleistung am Ausgangs-Anschluß 18' höher sein soll als die Eingangsleistung am Eingangs-Anschluß 12a' ist bei einer nicht weiter veranschaulichten Ausführungsform der Erfindung der Gleichstrom/Gleichstrom-Wandler 30 mit einem zusätzlichen Versorgungsspannungs-Anschluß für eine dem Pegel des Eingangs-Schaltsignals entsprechende Versorgungsspannung (etwa 12 - 14 Volt bzw. etwa 42 Volt) versehen.

Ohne hier schon auf weitere Details der Schaltungsanordnung einzugehen, sind bei einer Ausführungsform die Leistungshalbleiter des Gleichstrom/Gleichstrom-Wandlers 30 in wärmeleitendem.Kontakt mit Eisen enthaltenden induktiven Bauteilen des Gleichstrom/Gleichstrom-Wandlers angeordnet.

Zur Platz-/Volumeneinsparung sind bei der erfindungsgemäßen Schaltungsanordnung die elektronischen Bauteile des Gleichstrom/Gleichstrom-Wandlers 30 über tragende Leitungen miteinander sowohl elektrisch als mechanisch tragend verbunden.

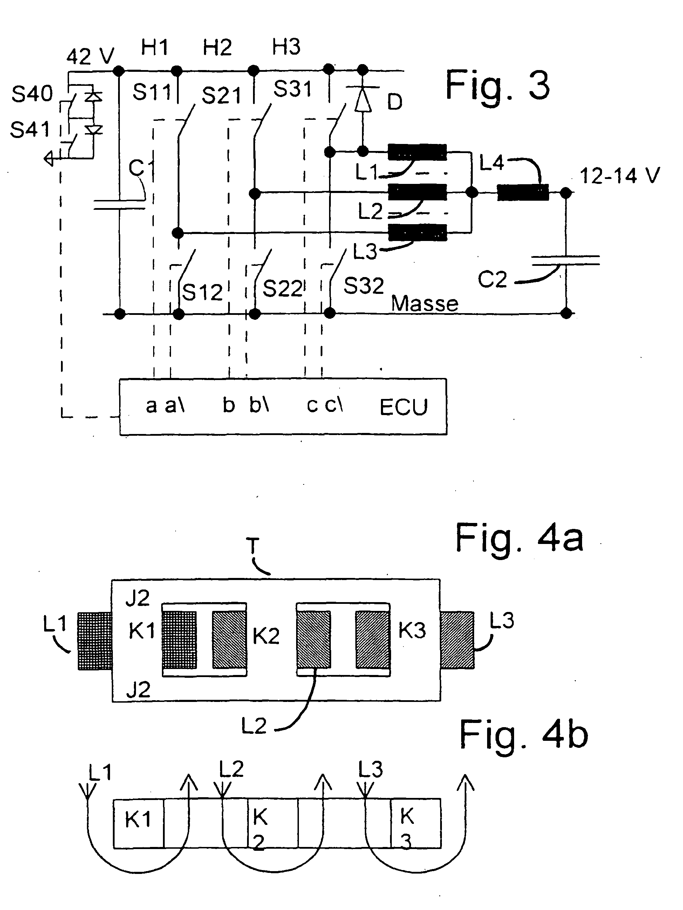

In Fig. 3 ist eine schematische Darstellung einer Schaltungsanordnung eines Spannungswandlers für eine erfindungsgemäße Schaltungsanordnung gemäß Fig. 2 gezeigt, wobei eingangsseitig eine Spannung mit einem niedrigeren Pegel (ca. 12 - 14 Volt) angelegt wird, während ausgangsseitig etwa Spannung mit einem höheren Pegel (ca. 42 Volt) durch diese erfindungsgemäße Schaltungsanordnung bereitgestellt werden.

Die hier angegebene Schaltungsanordnung ist zwar im Zusammenhang mit der Verwendung der Erfindung gemäß Fig. 2 beschrieben. Es ist jedoch auch möglich, diese Schaltungsanordnung ggf. mit größerer Eingangs- bzw. Ausgangsleistung mit Vorteil für andere Zwecke oder Einsatzgebiete zu verwenden.

Auf der Eingangsseite der erfindungsgemäßen Schaltungsanordnung liegen 12 - 14 Volt Gleichspannung an. Diese Gleichspannung wird an drei Induktivitäten L1, L2, L3 parallel angelegt, deren eingangsseitige Anschlüsse miteinander verbunden sind. Diese Induktivitäten L1, L2, L3 sind gleich groß (L1 = L2 = L3) und miteinander magnetisch leitend durch ein magnetisches Koppelelement T (siehe Fig. 4a, 4b) verbunden. Das magnetische Koppelelement T ist ein Ferrit-haltiges Bauteil, das die drei Induktivitäten L1, L2, L3 miteinander koppelt.

In der gezeigten Ausführungsform handelt es sich um einen Ferrit-Kern mit drei Schenkeln K1, K2, K3 die jeweils von einer der drei Induktivitäten L1, L2, L3 umgeben sind. An ihren jeweiligen beiden Stirnseiten sind die drei Schenkel K1, K2, K3 durch jeweils durch ein Joch J1, J2 verbunden. (siehe Fig. 4a, 4b). Es versteht sich, daß der Ferrit-Kern als Ganzes ein einstückiges Teil sein kann, oder als EI-, M, oder L-Eisenkern ausgestaltet sein kann. Dieses magnetisches Koppelelement T wirkt als Ausgleichstransformator, der keine elektrische Energie speichert.

In Fig. 4b ist darüberhinaus für die drei Induktivitäten L1, L2, L3 der Wicklungssinn angegeben.

Die erfindungsgemäße Schaltungsanordnung weist drei parallel geschaltete Halbbrücken H1, H2, H3 auf, die jeweils durch zwei zwischen die Ausgangssspannung (42 Volt) und Masse in Reihe geschaltete Leistungshalbleiter S11, S12; S21, S22; S₃₁, S32 gebildet sind. Vorzugsweise handelt es sich bei den Leistungshalbleitern um Power-MosFETs oder IGBTs, bei denen zusätzlich jeweils eine Diode D in Sperr-Richtung (wie beispielhaft lediglich für den Leistungshalbleiter S31 gezeigt) parallel geschaltet ist.

Jeweils am Mittelabgriff der drei Halbbrücken H1, H2, H3 ist der jeweils andere Anschluß einer der Induktivitäten L1, L2, L3 angeschlossen.

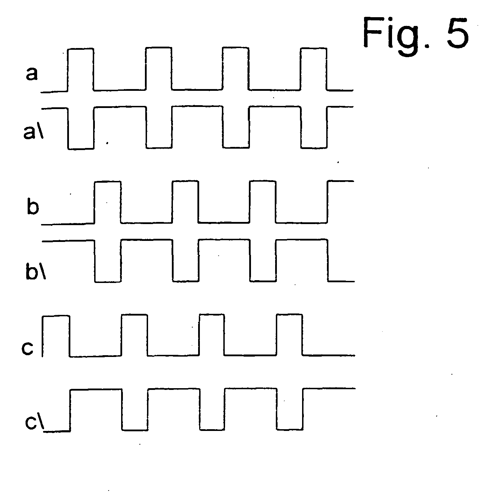

Die drei Halbbrücken H1, H2, H3 bzw. die sechs Leistungshalbleiter S11, S12; S21, S22; S31, S32 in Fig. 3 werden durch eine elektronische Ansteuerschaltung ECU über sechs Steuerleitungen a, a\; b, b\; c, c\ so angesteuert, daß jeweils nur aus einer der drei Induktivitäten L1, L2, L3 Strom abfließt. Dabei erfährt das magnetische Koppelelement T jeweils einen vollständigen Magnetisierungshub, so daß keine Vormagnetisierung auftritt. Der Verlauf der Ansteuerungssignale auf den sechs Steuerleitungen a, a\; b, b\; c, c\ ist in Fig. 5 veranschaulicht. Die elektronische Ansteuerschaltung ECU kann als dreistelliges Ring-Schieberegister mit invertierten und nicht-invertierten Ausgängen x, x\ realisiert sein, durch das eine 1-0-0- Folge mit entsprechendem Schiebetakt hindurchläuft. Dabei ist sicherzustellen, daß die invertierten und nicht-invertierten Ausgängen x, x\ sich nicht zeitlich "überlappen". Vielmehr muß zwischen den Pegelwechseln bei den invertierten und den nicht-invertierten Ausgängen x, x\ eine auf das Schaltverhalten der sechs Leistungshalbleiter S11, S12; S21, S22; S31, S32 angepaßte Totzeit (zum Beispiel einige 100 Nanosekunden) eingehalten sein.

Um Spannungsspitzen auf der Ausgangs-Seite der Schaltungsanordnung zu minimieren dient eine.weitere Induktivität L4, die zu den drei Induktivitäten L1, L2, L3 auf der Eingangsseite in Reihe geschaltet ist. Außerdem kann auf der Ausgangsseite parallel zu den Halbbrückenanordnungen und am von den Halbbrückenanordnungen abliegenden Anschluß der weiteren Induktivität L4 ausgangsseitig bzw. eingangsseitig jeweils ein Glättungskondensator C1 bzw. C2 angeordnet sein.

Anstelle der gezeigten Drei-Phasen-Ausführungsform der Schaltungsanordnung können auch nur eine oder zwei Phasen verwendet werden. Allerdings ist in diesen Fällen der Glättungsaufwand für das Erreichen einer im wesentlichen konstanten Ausgangsspannung größer.

Wie oben beschrieben kann der Ferritkern als Kühlkörper für die sechs Leistungshalbleiter S11, S12; S21, S22; S31, S32 verwendet werden.

In der vorstehend beschriebenen Ausführungsform der erfindungsgemäßen Schaltungsanordnung des Spannungswandlers ist ein Verhältnis der Eingangsspannung zur Ausgangsspannung von 1 : 3 (14 Volt : 42 Volt) realisiert. Dies ergibt sich aus dem Tastverhältnis der Ansteuerungssignale auf den sechs Steuerleitungen a, a\; b, b\; c, c\.

Selbstverständlich ist die Erfindung nicht auf das Wandelungsverhältnis von 1 : 3 beschränkt. Es ist ebenfalls möglich, ein höheres oder auch ein niedrigeres Wandelungsverhältnis 1 : n zu realisieren. In diesem Fall ist das Tastverhältnis (puls : Gesamtdauer einer Periode) ebenfalls 1 : n zu wählen. Außerdem empfielt es sich, in diesem Fall auch eine n-phasige Ausgestaltung der Schaltungsanordnung (n Halbbrücken mit entsprechenden Ansteuerleitungen aus der elektronischen Ansteuerschaltung ECU, n Induktivitäten etc.) zu wählen um den vorstehend beschriebenen Aufwand zur Spannungsglättung gering zu halten bzw. eine hohe Spannungskonstanz bei Lastwechseln zu realisieren.

Außerdem besteht auch die Möglichkeit, ein von 1 : n abweichendes Wandelungsverhältnis zu realisieren, bei dem "lücken" zwischen den einzelnen Impulsen (siehe Fig. 5) auftreten. Dies erfordert jedoch eine andere als die vorstehend beschriebene elektronische Ansteuerschaltung ECU in Form des dreistelligen Ring-Schieberegister mit invertierten und nicht-invertierten Ausgängen x, x\. In diesem Fall sind auch die vorstehend beschriebene weitere Induktivität L4 und entsprechend dimensionierte Glättungskondensatoren C1 bzw. C2 zwingend zur Energiespeicherung erforderlich.

Um die Ausgangsseite (auch bei einem Defekt eines oder mehrerer der sechs Leistungshalbleiter S11, S12; S21, S22; S31, S32) sicher von der Eingangsseite zu trennen dienen ausgangsseitig zwei weitere Leistungshalbleiter vorzugsweise in Form von N-Kanal Power-MosFETs S40, S41, die so verschaltet sind, daß ihre parasitären Dioden D40, D41 gegeneinander orientiert sind. Diese beiden Leistungshalbleiter S40, S41 werden ebenfalls (bei fehlender Eingangsspannung) durch die Ansteuerungsschaltung ECU so angesteuert, daß die Eingangsseite von der Ausgangsseite getrennt ist.

## Patentansprüche

1. Schaltungsanordnung mit einem Gleichstrom/Gleichstrom-Wandler (30), der wenigstens einen Eingangs-Anschluss (12a'), wenigstens einen Ausgangs-Anschluss (18') und einen Masse-Anschluss (12b') aufweist, wobei der Eingangs-Anschluss (12a') dazu eingerichtet ist, ein Eingangs-Schaltsignal zwischen einem ersten Spannungs-Pegel und einem Masse-Pegel zu empfangen, und der Ausgangs-Anschluss (18') dazu eingerichtet ist, ein Ausgangs-Schaltsignal zwischen einem vom ersten Spannungs-Pegel abweichenden, zweiten Spannungs-Pegel und dem Masse-Pegel abzugeben, dessen Signalverlauf im wesentlichen dem Verlauf des Eingangs-Schaltsignals folgt, wobei der Spannungswandler mit seinen Eingangs-, Ausgangs- und Masse-Anschlüssen in einem Gehäuse (10) angeordnet ist, das einen Sockel aufweist und in den Abmessungen und den Positionen den Eingangs-, Ausgangs- und Masse-Anachlüssen an dem Sockel eines Relais entspricht, und der Gleichstrom/Gleichstrom-Wandler (30) aufweist:
- wenigstens zwei aus zwei in Serie geschalteten Leistungshalbleitern (S11, S12; S21, S22**;** S31, S32) gebildete Halbbrückenschaltungen (H1, H2, H3), bei denen die jeweiligen beiden Leistungshalbleiter (S11, S12; S21, S22; S31, S32) mit einer Ansteuerschaltung (ECU) verbunden sind, die dazu eingerichtet ist, die beiden Leistungshalbleiter (S11, S12; S21, S22; S31, S32) gegenphasig leitend und sperrend zu schalten, wobei
- mit dem Mittelpunkt jeder Halbbrückenschaltung (H1, H2, H3) ein erster Anschluss einer Induktivität (L1, L2, L3) elektrisch leitend verbunden ist,
- jeweils zweite Anschlüsse der Induktivitäten (L1, L2, L3) elektrisch leitend miteinander verbunden sind, und
- die Induktivitäten (L1, L2, L3) miteinander magnetisch leitend durch ein magnetisches Koppelelement (T) verbunden sind, und wobei
- die Ansteuerschaltung (ECU) dazu eingerichtet ist, die Halbbrückenschaltungen (H1, H2, H3) so anzusteuern, dass jeweils nur an einer der Induktivitäten (L1, L2, L3) Spannung anliegt.

2. Schaltungsanordnung nach Anspruch 1, bei der der Gleichstrom/Gleichstrom-Wandler dazu eingerichtet ist, eine an dem Eingangs-Anschluss (12a') anliegende Spannung von etwa 12 - 14 Volt in eine an dem Ausgangs-Anschluss (18') bereitgestellte Spannung von etwa 42 Volt umzusetzen.

3. Schaltungsanordnung nach Anspruch 1, bei der der Gleichstrom/Gleichstrom-Wandler (30) dazu eingerichtet ist, eine an dem Eingangs-Anschluss (12a'.) anliegende Spannung von etwa 42 Volt in eine an dem Ausgangs-Anschluss (18') bereitgestellte Spannung von etwa 12 - 14 Volt umzusetzen.

4. Schaltungsanordnung nach Anspruch 2 oder 3, mit einem Versorgungsspannungs-Anschluss für eine dem Pegel des Eingangs-Schaltsignals entsprechende Versorgungsspannung (etwa 12 - 14 Volt bzw. etwa 42 Volt).

5. Schaltungsanordnung nach Anspruch 1, bei der ein oder jeder Leistungshalbleiter des Gleichstrom/Gleichstrom-Wandlers in wärmeleitendem Kontakt mit Eisen enthaltenden induktiven Bauteilen des Gleichstrom/Gleichstrom-Wandlers stehen.

6. Schaltungsanordnung nach Anspruch 1, bei elektronische oder elektrische Bauteile des Gleichstrom/Gleichstrom-Wandlers über tragende Leitungen miteinander elektrisch und mechanisch verbunden sind.

7. Schaltungsanordnung nach Anspruch 1, bei deren Gleichstrom/Gleichstrom-Wandler (30)
- eine vorbestimmte Anzahl n Halbbrückenschaltungen (H1, H2, H3) mit der Ansteuerschaltung (ECU) verbunden sind und mit dem Mittelpunkt jeder Halbbrückenschaltung (H1, H2, H3) ein erster Anschluss einer von einer vorbestimmte Anzahl n Induktivitäten (L1, L2, L3) elektrisch leitend verbunden ist und die jeweils zweiten Anschlüsse der Induktivitäten (L1, L2, L3) elektrisch leitend miteinander verbunden sind, und wobei vorzugsweise das magnetische Koppelelement.(T) ein ferrithaltiges Bauteil ist, das die n Induktivitäten (L1, L2, L3) miteinander koppelt.

8. Schaltungsanordnung nach Anspruch 1 oder 7, bei deren Gleichstrom/Gleichstrom-Wandler (30) an dem elektrischen Verbindungspunkt der zweiten Anschlüsse der Induktivitäten (L1, L2, L3) eine weitere Induktivität (L4) in Reihe geschaltet ist.

9. Schaltungsanordnung nach Anspruch 1 oder 8, bei deren Gleichstrom/Gleichstrom-Wandler (30) am parallel zu den Halbbrückenanordnungen und am von den Halbbrückenanordnungen abliegenden Anschluss der Induktivitäten (L1, L2, L3) bzw. der weiteren Induktivität (L4) jeweils ein Glättungskondensator (C1, C2) angeordnet ist.

## Claims

1. A circuit arrangement with a direct current/direct current converter (30) which comprises at least one input terminal (12a'), at least one output terminal (18') and one ground terminal (12b'), with the input terminal (12a') being adapted to receive an input switching signal between a first voltage level and a ground level, and the output terminal (18') being adapted to emit an output switching signal between a second voltage level, different from the first voltage level, and the ground level, the signal characteristic of which essentially follows the characteristic of the input switching signal, with the voltage converter with its input, output, and ground terminals being arranged in a housing (10) which comprises a socket and which corresponds to a relay with respect to the dimensions and the positions of the input, output, and ground terminals at the socket, and wherein the direct current/direct current converter (30) comprises:
- at least two half-bridge circuits (H1, H2, H3) formed by two power semiconductor devices (S11, S12; S21, S22; S31, S32) connected in series, wherein the respective two power semiconductor devices (S11, S12; S21, S22; 531, S32) are connected with a control circuit (ECU) which is adapted to switch the two power semiconductor devices (511, S12; S21, S22; S31, S32) to connect the two power semiconductor devices forward and reverse in an antiphase manner, with
- a first terminal of an inductor (L1, L2, L3) being connected electrically conductive with the centre of each half-bridge circuit (H1, H2, H3),
- second terminals each of the inductors (L1, L2, L3) being connected electrically conductive with each other, and
- the inductors (L1, L2, L3) being connected magnetically conductive with each other by a magnetic coupling element (T), and with the control circuit (ECU) being adapted to drive the half-bridge circuits (H1, H2, H3) in such a manner that voltage is applied to only one of the inductors (L1, L2, L3).

2. The circuit arrangement according to Claim 1, wherein the direct current/direct current converter is adapted to convert a voltage of approximately 12 - 14 V, which is applied at the input terminal (12a') to a voltage of approximately 42 V, which is provided at the output terminal (18').

3. The circuit arrangement according to Claim 1, wherein the direct current/direct current converter (30) is adapted to convert a voltage of approximately 42 V, which is applied at the input terminal (12a') to a voltage of approximately 12 - 14 V, which is provided at the output terminal (18').

4. The circuit arrangement according to Claim 2 or 3, with a supply voltage terminal for a supply voltage (approximately 12 - 14 V or approximately 42 V, respectively) which corresponds to the level of the input switching signal.

5. The circuit arrangement according to Claim 1, wherein one or each power semiconductor device of the direct current/direct current converter is arranged in a heat conductive contact with inductive components containing iron of the direct current/direct current converter.

6. The circuit arrangement according to Claim 1, wherein electronic or electric components of the direct current/direct current converter are electronically and mechanically connected with each other via load-carrying lines.

7. The circuit arrangement according to Claim 1, in whose direct current/direct current converter (30)
- a predetermined number n half-bridge circuits (H1, H2, H3) is connected with the control circuit (ECU) and with the centre of each half-bridge circuit (H1, H2, H3) a first terminal of one of the a predetermined number n inductors (L1, L2, L3) is connected electrically conducive, and the second terminals of each inductor (L1, L2, L3) are connected electrically conductive with each other, with the magnetic coupling element (T) being preferably a ferrite-containing component which couples the n inductors (L1, L2, L3) with each other.

8. The circuit arrangement according to Claim 1 or 7, in whose direct current/direct current converter (30) a further inductor (L4) is connected in series at the electric connecting point of the second terminals of the inductors (L1, L2, L3).

9. The circuit arrangement according to Claim 1 or 8, in whose direct current/direct current converter (30) a smoothing capacitor (C1, C2) each is arranged in parallel to the half-bridge arrangements and at the terminal remote from the half-bridge arrangements of the inductors (L1, L2, L3) or of the further inductor (L4), respectively.

## Revendications

1. Dispositif de commutation comprenant un convertisseur continu/continu (30) qui présente au moins une connexion d'entrée (12a'), au moins une connexion de sortie (18') et une connexion à la masse (12b'), ladite connexion d'entrée (12a') étant conçue pour recevoir un signal de commutation d'entrée entre un premier niveau de tension et un niveau de masse, et ladite connexion de sortie (18'), pour émettre un signal de commutation de sortie entre un second niveau de tension différent du premier niveau de tension et le niveau de masse, dont l'allure suit sensiblement l'allure du signal de commutation d'entrée, le transformateur de tension et ses connexions d'entrée, de sortie et de masse étant montés dans un boîtier qui présente un socle et correspond, de par son dimensionnement et les positions des connexions d'entrée, de sortie et de masse, au socle d'un relais, et le convertisseur continu/continu (30) présentant :
- au moins deux circuits en demi-pont (H1, H2, H3) formés à partir de deux semi-conducteurs de puissance connectés en série (S11, S12 ; S21, S22 ; S31, S32),
dans lesquels les deux semi-conducteurs de puissance respectifs (S11, S12 ; S21, S22 ; S31, S32) sont reliés à un circuit de commande (ECU) conçu pour commuter les deux semi-conducteurs de puissance (S11, S12 ; S21, S22 ; S31, S32) pour les faire passer de l'état de conduction à l'état de coupure en opposition de phase,
- une première connexion d'une inductance (L1, L2, L3) étant reliée de manière électriquement conductible au centre de chaque circuit en demi-pont (H1, H2, H3),
- les secondes connexions des inductances (L1, L2, L3) étant chacune reliées entre elles de manière électriquement conductible, et
- les inductances (L1, L2, L3) étant reliées magnétiquement entre elles par un élément de couplage magnétique (T), et
- le circuit de commande (ECU) étant conçu pour commuter les circuits en demi-pont (H1, H2, H3) de telle sorte qu'une seule des inductances (L1, L2, L3) est à chaque fois sous tension.

2. Dispositif de commutation selon la revendication 1, dans lequel le convertisseur continu/continu (30) est conçu pour convertir une tension comprise entre environ 12 et 14 Volt, appliquée à une connexion d'entrée (12a'), en une tension d'environ 42 Volt mise à disposition à la connexion de sortie (18').

3. Dispositif de commutation selon la revendication 1, dans lequel le convertisseur continu/continu (30) est conçu pour convertir une tension d'environ 42 Volt appliquée à une connexion d'entrée (12a') en une tension comprise entre environ 12 et 14 Volt, mise à disposition à la connexion de sortie (18').

4. Dispositif de commutation selon la revendication 2 ou 3, présentant une connexion d'alimentation de tension pour une tension d'alimentation (comprise entre environ 12 et 14 Volt ou d'environ 42 Volt) correspondant au niveau du signal de commutation d'entrée.

5. Dispositif de commutation selon la revendication 1, dans lequel un ou chacun des semi-conducteurs de puissance du convertisseur continu/continu est en contact thermoconducteur avec des composants inductifs, contenant du fer, du convertisseur continu/continu.

6. Dispositif de commutation selon la revendication 1, dans lequel des composants électroniques ou électriques du convertisseur continu/continu sont reliés électriquement ou mécaniquement entre eux par des conduites portantes.

7. Dispositif de commutation selon la revendication 1, dans le convertisseur continu/continu (30) duquel
- un nombre prédéterminé n de circuits en demi-pont (H1, H2, H3) est relié au circuit de commande (ECU), et une première connexion d'un nombre prédéterminé n d'inductances (L1, L2, L3) est reliée de manière électriquement conductible au centre de chaque circuit en demi-pont (H1, H2, H3), et les secondes connexions des inductances (L1, L2, L3) sont reliées entre elles de manière électriquement conductible, et l'élément de couplage magnétique (T) étant préférentiellement un composant contenant du ferrite, qui assure le couplage des n inductances (L1, L2, L3) entre elles.

8. Dispositif de commutation selon la revendication 1 ou 7, dans le convertisseur continu/continu (30) duquel une inductance supplémentaire (L4) est connectée en série au point de liaison électrique des secondes connexions des inductances (L1, L2, L3).

9. Dispositif de commutation selon la revendication 1 ou 8, dont le convertisseur continu/continu (30) présente un condensateur de filtrage (C1, C2) placé respectivement du côté sortie, parallèlement aux dispositifs à demi-pont, et du côté entrée, à la connexion des inductances (L1, L2, L3) ou de l'inductance supplémentaire (L4), qui est éloigné des dispositifs à demi-pont.
